# EUROPÄISCHE PATENTSCHRIFT

(11) **EP 1 735 078 B1**
(45) Veröffentlichungstag und Bekanntmachung des Hinweises auf die Patenterteilung: **09.03.2011**
(21) Anmeldenummer: 05733492.2
(22) Anmeldetag: 11.04.2005
(51) Int. Cl.: B01D 50/00, B01D 46/24, B01D 45/08

(54) **ÖLABSCHEIDER**
OIL SEPARATOR
SEPARATEUR D'HUILE

(30) Priorität: 14.04.2004 DE 102004018019
(43) Veröffentlichungstag der Anmeldung: 27.12.2006
(73) Patentinhaber: MANN + HUMMEL GMBH, 71638 Ludwigsburg (DE)
(72) Erfinder: HEIKAMP, Wolfgang, 67165 Waldsee (DE); ZÜRKER, Markus, 67373 Dudenhofen (DE); KÜHLBORN, Manfred, 67346 Speyer (DE)
(74) Vertreter: Voth, Gerhard
(86) Internationale Anmeldenummer: PCT/EP2005/051590
(87) Internationale Veröffentlichungsnummer: WO 2005/099868

(56) Entgegenhaltungen:
- EP-A- 0 592 869
- DE-A- 4 407 177
- DE-C- 3 703 271
- US-A- 4 666 473

## Beschreibung

Die Erfindung betrifft eine Ölabscheideranordnung mit einem Ölabscheider zum Abscheiden von Öl aus einem Gasstrom nach dem Oberbegriff des Patentanspruches 1. Außerdem betrifft die Erfindung die Anwendung des erfindungsgemäßen Filters als Entlüftungsfilter für einen thermodynamischen Retarder.

Derartige Ölabscheider werden oft an Öltanks oder Gehäusen angebracht, in welchen das Öl funktionsbedingt zu- und abströmt. Dadurch stellt sich die Aufgabe, die in der ausströmenden Luft vorhandenen Ölmengen, die tröpfchen- oder schwallartig auftreten können, abzuscheiden und somit die Ölemissionen zu minimieren oder ganz zu beseitigen. Gleichzeitig dient der Ölabscheider dazu, die in das Gehäuse eintretende Luft von Staub- und Schmutzpartikelri zu befreien. Von derartigen Abscheidern wird eine möglichst hohe Abscheideleistung bei möglichst geringem Druckverlust gefordert.

Die Patentschrift DE 37 03 271 C1 beschreibt einen Feuchtigkeits- und Ölabscheider, der ein vertikal zylindrisches Gehäuse enthält, mit einem Deckel und einem Stutzen zum Eintritt der verunreinigten Luft und mit einem Abweiser in der Gestalt einer mit dem Boden nach oben gekehrten Schale. Die Filterpatrone ist im oberen Gehäuseteil montiert und besteht aus einer Gruppe von gelochten Zylindern.

Das Patent US 4,666,473 zeigt einen Abscheider für Flüssigkeiten und Gase mit einem Fluidverteiler zwischen der Grobabscheidung und der Feinabscheidung des Abscheiders. Dieser Fluidverteiler ist so angeordnet, dass die Gase vor Eintritt in den Feinabscheider beschleunigt werden und gleichzeitig von der im Feinabscheider abgeschiedenen Flüssigkeit weggelenkt werden.

Aus der DE 44 07 177 ist ein Öltankbelüftungsfilter bekannt, welcher über einen Anschlussstutzen mit einem Gehäuse verbunden ist und in welchem ein Filterelement radial durchströmt wird. Das Filterelement ist von einem Außenmantel geschützt, wobei die Abströmung zur Außenseite über die Unterseite des Außenmantels stattfindet. Um ein Abtropfen des abgeschiedenen Öls zur Außenseite hin zu vermeiden, ist auf der Innenseite des Außenmantels ein Leitblech angebracht, an welchem das abgeschiedene Öl in eine Auffangwanne tropft und in den Tank zurückfließen kann.

Nachteilig an dieser Ausführung ist, dass das Filterelement als einzige Abscheidestufe vorhanden ist und somit dem Auftreten von luftbeladenem Ölstrom in unterschiedlicher Identität, z B. in Schwallform oder in größeren Tröpfchen, nicht Rechnung getragen wird. Weiterhin ist durch die Querschnittsverengung des Flansches ein erhöhter Strömungswiderstand gegeben. Durch das Auffangen des Öls auf der Außenseite des Filtermediums ist ein Überschwappen des aufgefangenen Öls, z. B. in beweglichen Fahrzeugen, nicht ausgeschlossen.

Aufgabe der Erfindung ist es, eine Ölabscheideranordnung zu schaffen, die bei minimalem Druckverlust eine maximale Abscheideleistung gewährleistet und die Gefahr des Austretens von Öl an die Außenseite minimiert.

Diese Aufgabe wird durch die Merkmale des Patentanspruches 1 gelöst.

### Vorteile der Erfindung

Die erfindungsgemäße Ölabscheideranordnung zum Abscheiden von Öl aus einem Gasstrom umfasst einen Ölabscheider und ein Gehäuse, an dem der Ölabscheider angeordnet ist_ In dem Gehäuse ist in der Gehäuseinnenseite eine Ölmenge bevorratet und das Gehäuse ist zu einer Außenseite hin getrennt. Der Ölabscheider ist mittels einer Flanschverbindung auf das Gehäuse aufgeflanscht und ist in einem Teilbereich in das Gehäuse integriert. Der Ölabscheider wird von einem Außenmantel umfasst und durch eine geschlossene Stirnseite zur Außenseite hin verschlossen. Innerhalb des Außenmantels ist ein radial durchströmbares Stützrohr angeordnet, welches ein Filterelement trägt. Das Stützrohr weist eine geschlossene obere Stirnseite auf und eine zur Gehäuseinnenseite hin geöffnete untere Stirnseite. Ein Filterelement umschließt das Stützrohr von der oberen bis zur unteren Stirnseite. Das Stützrohr als auch das Filterelement wird an der unteren Stirnseite von einer ringförmigen Endscheibe umschlossen, wobei die Endscheibe das Filterelement an der radialen äußeren Seite übersteht. Die auf der Innenseite des Stützrohres offene Endscheibe dichtet an der Außenseite des Filterelementes das Element radial gegenüber dem Gehäuse ab. Üblicherweise wird die Abdichtung zwischen Endscheibe und einer kommunizierenden Dichtungskontur des Gehäuses über einen Radialdichtring gewährleistet. Dabei ist sowohl der Außenmantel als auch das Filterelement und das Stützrohr zylinderförmig ausgeführt. Als Aufnahmefläche für die radiale Abdichtung der unteren Endscheibe kann ein Rohrstutzen in das Gehäuse integriert sein, oder der Ölabscheider ist derartig abgestimmt, dass die Endscheibe im Bereich der Wandungsdicke des Gehäuses positioniert ist. Die Verbindung zur Außenseite wird durch die Luftauslässe am Außenmantel gewährleistet, die vorzugsweise im oberen Bereich des Ölabscheiders radial angeordnet sind. Am Ölabscheider sind umfangsseitig Aufnahmeösen angebracht, mit denen der Ölabscheider beispielsweise durch eine Schraubverbindung auf dem Gehäuse fixiert werden kann. Als Material wird für den Außenmantel sowie für die Endscheiben bzw. stirnseitigen Scheiben als auch für das Stützrohr Polyamid vorgeschlagen. Es kann jedoch auch Polyamid kombiniert mit Metallen, z. B. für das Stützrohr gewählt werden. Die Endscheibe wird vorzugsweise mit dem Mittelrohr verklipst und zusätzlich verklebt, wodurch sich eine dichte Verbindung ergibt. Der ölbeladene Gasstrom durchströmt somit das Stützrohr und das Filterelement radial und wird weiter durch die radialen Luftauslässe zur Außenseite geführt. Die abgeschiedenen Ölpartikel lagern sich auf der Innenseite des Außenmantels an und fließen der Schwerkraft folgend im ringförmigen Raum zwischen Filterelement und Außenmantel in Richtung Gehäuseinnenseite ab, wo sie durch das Filterelement hindurch wieder in die Gehäuseinnenseite gelangen. Dieser Vorgang des Zurückströmens des abgeschiedenen Öls wird spätestens dann beschleunigt, wenn funktionsbedingt eine Strömungsumkehr von der Außenseite zur Gehäuseinnenseite stattfindet. Als Filtermedium eignet sich hierbei ein Metallvlies, welches aus Metallfasern gebildet wird, wobei die Faserstärke auf den notwendigen Abscheidegrad sowie auf den notwendigen Druckverlust abgestimmt werden kann. Zur Fixierung des Filtervlieses ist das Vlies zur Außenseite hin von einer Polyesterschicht umschlossen, zur Innenseite hin wird das Filterelement vom Stützrohr getragen, wobei hier zusätzlich auch ein Polyestervlies angeordnet werden kann.

Die auf der Unterseite des Stützrohres angeordnete Endscheibe trägt als zusätzliches Vorabscheideelement einen Prallabscheider. Dieser kann durch höhenversetzte Prallplatten angeordnet werden, welche durch Stege miteinander verbunden sind, so dass schwall- oder spritzerartig auftretendes Öl von diesen Prallplatten zurückgehalten wird und wieder ins Gehäuseinnere abfließt. Vorzugsweise werden hier zwei oder mehrere Prallplatten angeordnet, die schräg oder horizontal ausgerichtet sind, wodurch das Öl an den Flächen mehrerer Platten abprallen und zurückfließen kann. Zweckmäßigerweise werden die Platten dergestalt geneigt, dass ein Abfließen des abgeschiedenen Öls in die Gehäuseinnenseite stattfinden kann.

Die Erfindung nutzt somit in vorteilhafter Weise mehrere Abscheideelemente in einer Vorrichtung. Dies ermöglicht den Einsatz des Ölabscheiders bei Gasströmen mit unterschiedlichen Tröpfchengrößen, wobei auch schwallförmig auftretendes Öl sowie Spritzer durch die Strömungsführung des Ölabscheiders zurückgehalten werden. Weiterhin wird es vermieden, dass bereits am Außenmantel abgeschiedenes Öl auf die Außenseite gelangt. Durch diese mehrstufige Abscheidung wird eine Abstimmung des Ölabscheiders möglich, welche eine hohe Abscheideleistung mit einem geringen, fast zu vernachlässigenden Druckverlust kombiniert. Diese Eigenschaften eröffnen die Anwendung des Ölabscheiders in Bereichen, in denen nach dem bisherigen Stand der Technik sehr viel aufwendigere Abscheidemechanismen installiert werden mussten. Die Erfindung trägt auch dazu bei, den ständig steigenden gesetzlichen Anforderungen bzgl. reduzierter Emissionswerte Rechnung zu tragen.

Gemäß einer vorteilhaften Ausführungsform der Erfindung sind zwischen Luftauslass und Filterelement Zwischenräume vorhanden, wovon wenigstens einer ein Kondensatabscheideraum ist. Diese zusätzlichen Abscheideräume können das Filterelement sowohl radial umschließen, als auch zwischen oberer Stirnseite des Stützrohres und der Stirnseite des Außenmantels angebracht sein. Die Trennung zum Kondensatabscheideraum muss somit durch perforierte Ringe oder perforierte Scheiben gewährleistet werden. Da zur Kondensation eine möglichst große wärmeleitfähige Wärmeoberfläche benötigt wird, liegt es nahe, ein einfaches Metallgeflecht im Kondensatabscheideraum anzuordnen. Als Alternative zum Drahtgeflecht stehen jedoch auch plattenförmige Metallanordnungen zur Verfügung. Bei der Verwendung von großflächigeren Kondensationskörpern können diese auch als Trennelemente zwischen den Räumen oder als Trägerelemente des Ölabscheiders genutzt werden. Während großförmige Kondensationselemente mittels Kleben oder Fügen im Kondensatabscheideraum befestigt werden müssen oder an die Größe des Kondensationsraumes angepasst werden müssen, kann ein Stahlgeflecht, das in seiner Größe in etwa auf den Kondensatabscheideraum abgestimmt ist, auf einfache Weise in den Kondensatabscheideraum eingelegt werden und fixiert seine Position durch die Elastizität gegenüber dem Einbauraum. Idealerweise ist im Kondensatabscheideraum an seinem Mittelpunkt eine definierte Öffnung vorhanden, durch welche der ölbeladene Gasstrom einströmt. Weiterhin sind an den außenliegenden Umfangsflächen des Kondensatabscheideraumes mehrere Luftauslässe vorhanden, durch welche der Gasstrom zur Außenseite hin abströmt. Dadurch wird eine gleichmäßige Umströmung der Kondensatelemente erreicht und eine größtmögliche Kondensatabscheidung gewährleistet. Der Kondensatabscheideraum wird seitlich durch Barriereelemente umschlossen, welche verhindern, dass das kondensierte Öl zum Luftauslass fließt. Im Idealfall sind die unteren Stirnflächen des Kondensationsraumes zur Einströmungsöffnung des Kondensatabscheideraums geneigt, wodurch ein Abfließen des abgeschiedenen Öls in Richtung Gehäuseinnenseite gewährleistet ist. Die Anordnung eines Kondensatabscheideraumes ermöglicht es vorteilhaft, die noch im Gasstrom vorhandenen Öltröpfchen abzuscheiden und damit die ausströmenden Emissionen weiterhin zu reduzieren. Da diese Art der Ölabscheidung großflächige Strömungsquerschnitte erlaubt, kann die Abscheidung mit minimalem Strömungswiderstand gewährleistet werden.

In einer weiteren vorteilhaften Ausgestaltungsvariante wird der Kondensatabscheideraum von der Seite des Filtermediums durch eine definierte Öffnung angeströmt. Diese definierte Öffnung ist im Zentrum des Kondensatabscheideraumes angebracht und stellt einen begrenzenden Strömungsquerschnitt dar. Eine einzelne definierte Öffnung ist vorteilhaft, da beim Verteilen der Querschnittsfläche auf mehrere Öffnungen die Gefahr des Zusetzens steigt. Nur bei entsprechend großen Strömungsquerschnitten ist es sinnvoll, mehrere Öffnungen anzubringen. Grundsätzlich können die Öffnungen auf funktionsbedingte Anforderungen der Ölabscheideranordnung abgestimmt werden. Diese Anforderungen werden von der Funktion des Gehäuses gegeben, in welchen der Ölabscheider eingebaut ist. Als Hauptanforderung wird hier der Volumenstrom genannt, mit welchem das Gehäuse be- oder entlüftet wird. So ist dieser Volumenstrom beispielsweise an dem Gehäuse eines thermodynamischen Retarders entscheidend für die Reaktionszeit des Aggregates und damit für die Bremsverzögerung. Um die Be- und EntlüftungsgeschvÄndigkeit des Gehäuses zu variieren, ist es möglich, durch Ventile weitere Querschnittsströmungen freizugeben, die je nach Bedarf beim Be- oder Entlüftungszyklus des Gehäuses durch eine Bypassöffnung die definierte Öffnung umgehen, Diese definierte Öffnung zur Begrenzung des Volumenstromes ermöglicht es in vorteilhafter, einfacher Weise, eine Regulierung ohne weitere aufwendige Bauteile zu ermöglichen und ist wirtschaftlich einfach herzustellen und zudem vollständig in der Ölabscheideranordnung integriert.

Eine weitere vorteilhafte Gestaltungsvariante der Erfindung ergibt sich insbesondere mit dem erwähnten Kondensatabscheideraum. Der Kondensatabscheideraum wird vorzugsweise über das Zentrum angeströmt und weist an seinen Außenseiten Abströmöffnungen auf. Um zu verhindern, dass das abgeschiedene Öl durch die Abströmöffnungen gelangt, werden die Abströmöffnungen in der begrenzenden Wand deutlich über die untere Stimfläche des Kondensatabscheideraumes gesetzt. Somit bilden die seitlichen Begrenzungsflächen eine Barriere, die verhindert, dass das abgesetzte Öl über die Abströmöffnungen gelangen kann. Die Luftauslässe des Abscheideraumes müssen nicht zwangsläufig direkt auf die Außenseite führen, sondern können auch noch durch einen Zwischenraum von dem Luftauslass getrennt sein. Vorzugsweise sind die unteren Stirnflächen des Abscheideraumes nach innen geneigt, wodurch das abgeschiedene Öl in Richtung des Filtermediums abtropfen kann. Durch diese barriereförmige Umschließung des Kondensatabscheideraumes wird das kondensierte Öl vorteilhaft zurückgehalten und der Austrag des Öls auf die Außenseite des Ölabscheiders wird weiterhin minimiert.

Gemäß einer weiteren vorteilhaften Ausgestaltung der Erfindung wird der Luftauslass, durch welchen das Gas auf die Außenseite gelangt, an den seitlichen Umfangsflächen der Ölabscheideranordnung angebracht. Idealerweise ist hierbei zwischen Luftauslass und den Abströmöffnungen des Kondensatabscheideraumes ein Zwischenraum vorhanden, wobei die Unterseite des Zwischenraumes zum Luftauslass hin geneigt ist. Der Luftauslass setzt hierbei bündig mit dem tiefen Bereich des Zwischenraumes an. Bei dieser Anordnung wird es vorteilhaft verhindert, dass Wasser, welches bei Reinigungsarbeiten oder aufgrund von Witterungseinflüssen an der Außenseite der Ölabscheideranordnung auftritt, in das Innere des Ölabscheiders bzw. in den Kondensatabscheideraum gelangt oder das Filterelement durchdringen kann. Das Eindringen des Wassers wird aufgrund der seitlichen Anordnungen erschwert. Sollte dennoch Wasser in den Zwischenraum gelangen, so wird es durch die Barrieren, welche den Zwischenraum von dem Kondensatabscheideraum trennen, zurückgehalten. Durch die nach außen geneigte untere Stirnseite des Zwischenraumes wird das Wasser zum Luftauslass hin abfließen. Je nach Einbausituation der Ölabscheideranordnung können auch mehrere Luftauslässe am Außenmantel vorhanden sein.

Eine weitere vorteilhafte Gestaltungsmöglichkeit der Erfindung betrifft den Prallabscheider an der unteren Stirnseite. Dieser Prallabscheider ragt vorzugsweise in das Stützrohr des Ölabscheiders hinein und weist mehrere horizontal übereinander angeordnete Abscheideflächen auf. Die Abscheideelemente überdecken sich deutlich in horizontaler Richtung und sind in vertikaler Richtung durch Stege miteinander befestigt. Durch diese Anordnung ergibt sich ein labyrinthartiger Durchströmungsquerschnitt des Prallabscheiders, welcher den Gasstrom in einen kaskadenförmigen Verlauf führt. Der Gasstrom wird jeweils an den einzelnen Abscheideelementen umgelenkt, wodurch die Ölpartikel auf die Abscheideelemente prallen und von dort wieder der Schwerkraft entsprechend auf die Gehäuseinnenseite des Ölabscheiders abtropfen. Idealerweise sind die Abscheideelemente dergestalt geneigt, dass das abgeschiedene Öl immer zur Innenseite des Gehäuses abtropft. Durch diese vorteilhafte Anordnung des Prallabscheiders werden größere Öltröpfchen oder Spritzer bereits bei der Einströmung in das Stützrohr abgeschieden.

Die erfindungsgemäße Ölabscheideranordnung eignet sich insbesondere zur Verwendung eines Ent- und Belüftungsfilters für das Gehäuse eines thermodynamischen Retarders. Um einen größtmöglichen Strömungsquerschnitt und dadurch einen minimalen Strömungswiderstand des Ölabscheiders zu erreichen, wird der Ölabscheider mit seinem Außenmantel auf eine kommunizierende Kontur des Retardergehäuses angeflanscht. An der Mantelfläche sind hier vorzugsweise Axialdichtnuten eingearbeitet, die die Mantelfläche gegenüber dem Retardergehäuse abdichten. Eine Befestigungsmöglichkeit wird zweckmäßigerweise durch an dem Außenmantel angebrachte Ösen über eine Schraubverbindung erreicht. Durch diese Anordnung ragt das gesamte Filterelement samt Stützt rohr in die Innenseite des Gehäuses, wodurch das Stützrohr bzw. der Prallabscheider ohne weitere Verengung frei im Gehäuse angeströmt werden kann. Durch diese Anordnung wird der Förderung einer maximalen Strömungsgeschwindigkeit bei minimalem Druckverlust Rechnung getragen. In vorteilhafter Weise wird durch die Verwendung der erfindungsgemäßen Ölabscheideranordnung mit dem Retardergehäuse die gesamte kombinierte Abscheidefunktion genutzt. Prallabscheider, Filterelement und Kondensationsabscheidung sind unmittelbar kommunizierend in einem Gehäuse angeordnet. Dies ermöglicht eine konstruktiv platzsparende Gestaltung sowie eine wirtschaftliche Fertigungsmöglichkeit.

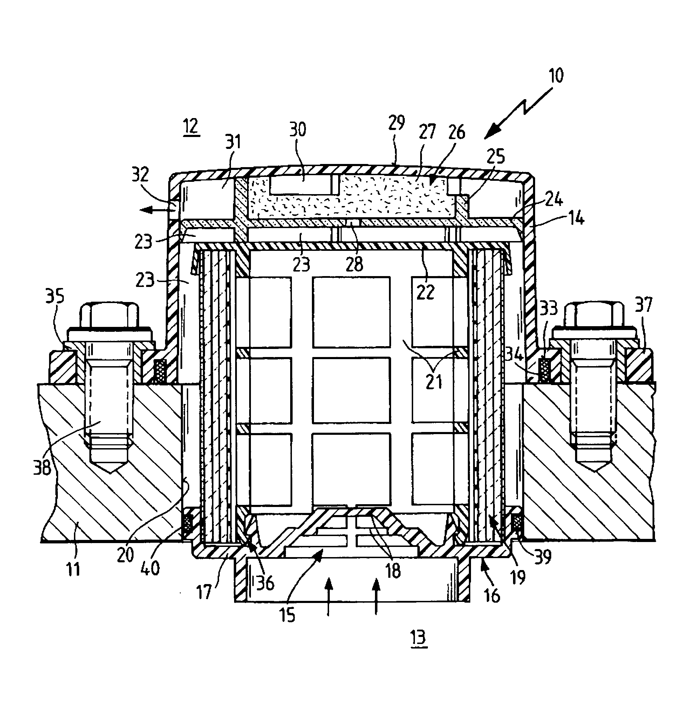

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand eines schematischen Ausführungsbeispieles beschrieben. Hierbei zeigt die Figur eine erfindungsgemäße Ölabscheideranordnung im Vollschnitt.

### Beschreibung der Ausführungsbeispiele

In der Figur ist die Ölabscheideranordnung 10 mit einem angeflanschten Gehäuse 11 1 dargestellt. Das Gehäuse 11 wird mittels Schraubenverbindungen 38 gesichert. Innerhalb des Außenmantels 14 ist sowohl der Prallabscheider 15 als auch das Filterelement 19 sowie der Kondensatabscheideraum 26 untergebracht. Der Außenmantel 14 umschließt die Ölabscheideranordnung 10 umfangsseitig und ist einstückig mit der Stirnseite des Außenmantels 29 ausgeführt. Alternativ zu dieser Ausführung kann die Stirnseite des Außenmantels 29 auch separat ausgeführt auf dem Außenmantel 14 befestigt werden. Weiterhin sind am Außenmantel 14 Aufnahmeösen 37 angeordnet, welche über die Metallbuchsen 35 durch eine Schraubenverbindung 38 auf das Gehäuse 11 angespannt werden. Um den Außenmantel 14 dichtend auf dem Gehäuse 11 abzuschließen, ist in einer umlaufenden Nut 33 eine Elastomerdichtung 34 angebracht, welche eine dichte Verbindung mit der Gehäuseoberfläche herstellt. Somit ist die Gehäuseinnenseite 13 von der Außenseite 12 getrennt, und der Gasstrom muss die Ölabscheideranordnung 10 mit allen Abscheidestufen durchströmen. Innerhalb des Außenmantels 14 ist ein Stützrohr 21 angeordnet, welches umfangsseitig vom Filterelement 19 umschlossen ist. Die obere Stirnseite 22 des Stützrohres 21 ist verschlossen ausgeführt und die Umfangsseiten des Stützrohres 21 sind gitterförmig ausgestaltet und somit gasdurchlässig- An der unteren Seite des Stützrohres 21 ist die Endscheibe 17 angeordnet, welche durch eine Schnappverbindung 36 am Stützrohr 21 befestigt ist. Das Filterelement 19 ist somit zwischen der oberen Stirnseite 22 und der unteren Stirnseite 16 formschlüssig eingeschlossen. Zur Stabilisierung der Verbindung und zur Sicherstellung der Dichtheit kann das Filterelement 19 an den Stirnseiten zusätzlich eingeklebt werden. Diese Klebeverbindung kann sowohl durch Schmelzschweißen als auch durch ein- oder mehrkomponentige Kleber hergestellt werden. An der unteren Endscheibe 17 ist umfangsseitig eine Radialnut 39 eingearbeitet, welche mit einem eingebrachten O-Ring 40 eine dichtende Verbindung zur zylindrischen Aufnahmefläche 20 des Gehäuses 11 herstellt. An der Endscheibe 17 sind im Bereich innerhalb des Stützrohres 21 in Richtung der Längsachse zueinander versetzte Abscheideelemente 18 angeordnet, welche einen Prallabscheider 15 bilden. Die Abscheideelemente 18 sind hierbei horizontal überlappend angeordnet, wodurch sich ein kaskadenförmiger Strömungsweg für die ausströmenden Gase bzw, Öldämpfe bildet. Die ausströmenden Dämpfe strömen somit von der Gehäuseseite 13 zur Außenseite 12 hin, durch den Prallabscheider in das Mittelrohr und müssen das Filterelement 19, welches das Stützrohr 21 umschließt, radial durchströmen. Zwischen der oberen Stirnseite 22 des Stützrohres 21 und dem oberhalb des Stützrohres 21 liegenden Trennelement 24 ist ein Trennraum 23 vorhanden. Dieser Trennraum 23 umschließt auch Filterelement 19 ringförmig. Zwischen Trennelement 24 und der Stirnseite des Außenmantels 29 ist ein ringförmiger Kondensatabscheideraum 26 vorhanden. Der Kondensatabscheideraum 26 ist hierbei nicht über den gesamten Durchmesser der Ölabscheideranordnung 10 ausgedehnt, sondern nur auf eine reduzierte Kreisfläche. Der Kondensatabscheideraum 26 kommuniziert durch eine definierte Öffnung 28 mit dem Trennraum 23. Radial wird der Kondensatabscheideraum 26 durch Barriereelemente 25 begrenzt, wobei sich die Barriereelemente 25 axial bis zur Stirnseite des Außenmantels 29 ausdehnen. In Richtung des stirnseitigen Außenmantels 29 sind radiale Abströmöffnungen 30 vorhanden, welche mit dem Zwischenraum 31 kommunizieren. Innerhalb des Kondensatabscheideraumes 26 ist ein Metallgeflecht 27 angeordnet, an dem sich der Öldunst kondensiert und auf dem Trennelement 24 anlagert. Der Kondensatabscheideraum 26 wird somit vom Zwischenraum 31 ringförmig umschlossen.

In dem gezeigten Ausführungsbeispiel ist nur ein Luftauslass 32 vorhanden, wobei zwischen Kondensatabscheideraum 26 und dem Zwischenraum 31 mehrere Abströmöffnungen 30 angedeutet sind. Dies bewirkt eine gleichmäßige radiale Durchströmung des Kondensatabscheideraumes 26. Die axiale Sicherung des Stützrohres 21 im Außenmantel 14 ist durch nicht sichtbar dargestellte Sicherungselemente zwischen Außenmantel 14 und der oberen Stirnseite 22 des Stützrohres 21 hergestellt. Dies kann beispielsweise durch eine radiale Verstiftung oder Verschraubung oder auch durch Verklebung gewährleistet werden. Selbstverständlich ist auch eine Verklipsung mit dem Außenmantel 14 umsetzbar.

Alternativ zu dieser Ausführung ist auch eine axiale Fixierung des Stützrohres 21 mit der Stirnseite des Außenmantels 29 möglich, wobei diese Fixierung durch das Trennelement 24 hindurch oder auch durch das Trennelement 24 selbst stattfinden kann. Im zweiten Fall würde eine Art Kettenverklipsung zwischen der Stirnseite des Außenmantels 29 dem Trennelement 24 und dem Stützrohr 21 stattfinden. Da im gezeigten Ausführungsbeispiel nur die obere Stirnseite 22 des Stützrohres 21 axial fixiert wird, ist das Trennelement 24 zwischen der Stirnseite des Außenmantels 29 und der oberen Stirnseite 22 eingespannt. Der Gasstrom strömt somit durch den Prallabscheider 15 in das Stützrohr ein, wobei bereits größere Tropfen abgeschieden werden. Im weiteren Verlauf durchströmt er das Stützrohr 21 sowie das Filterelement 19 radial, wodurch auch kleinere Ölpartikel vom Filterelement aufgenommen werden. Der Gasstrom strömt im weiteren Venauf durch den Trennraum 23 über die definierte Öffnung 28 in das Zentrum des Kondensatabscheideraumes 26 ein, durchströmt diesen radial von innen nach außen und gelangt weiter durch die Abströmöffnung 30 in den Zwischenraum 31. Im Kondensatabscheideraum 26 werden auch als Öldampf vorhandene Tröpfchen abgeschieden. Da das durchströmte Volumen des Ölabscheiders funktionsbedingt in der Regel begrenzt ist und nach der Ausströmphase wieder eine Einströmphase stattfindet, fließt das abgeschiedene Öl aus dem Kondensatabscheideraum 26 durch die definierte Öffnung 28 wieder in den Trennraum 23, wodurch es der Rückströmung und der Schwerkraft folgend wieder durch das Filterelement 19 gezogen wird und durch die Prallabscheider 15 wieder ins Gehäuseinnere 13 zurückfließt.

## Patentansprüche

1. Ölabscheideranordnung mit einem Ölabscheider (10) zum Abscheiden von Öl aus einem Gasstrom und mit einem Gehäuse (11), an dem der Ölabscheider angeordnet ist und das eine Innenseite (13) von einer Außenseite (12) trennt, wobei der Ölab-scheider (10) ein innerhalb eines Außenmantels (14) angeordnetes, radial durchströmbares Stützrohr (21) aufweist, wobei das Stützrohr (21) an seiner oberen Stirnseite (22) geschlossen ist und an seiner unteren Stirnseite (16) mit der Innenseite (13) des Gehäuses (11) kommuniziert und an seiner Umfangsseite ein Filterelement (19) trägt, **dadurch gekennzeichnet, dass** im Bereich der unteren Stirnseite (16) des Stützrohres (21) ein Prallabscheider (15) angeordnet ist, wobei der Außenmantel (14) an seiner Unterseite dichtend mit dem Gehäuse verbunden ist.

2. Ölabscheideranordnung nach Anspruch 1, **dadurch gekennzeichnet, dass** zwischen Außenmantel (14) und Filterelement (19) Zwischenräume (31) vorhanden sind, wovon wenigstens einer ein Kondensatabscheideraum (26) ist.

3. Ölabscheideranordnung nach Anspruch 2, **dadurch gekennzeichnet, dass** im Kondensatabscheideraum (26) metallische Kondensationselemente angeordnet sind.

4. Ölabscheideranordnung nach den vorhergehenden Ansprüchen 2 bis 3, **dadurch gekennzeichnet, dass** der Kondensatabscheideraum (26) zur Strömungsseite des Filterelementes (19) hin eine definierte Öffnung (28) aufweist, welche den Gasstrom begrenzt.

5. Ölabscheideranordnung nach einem der vorhergehenden Ansprüche 2 bis 4, **dadurch gekennzeichnet, dass** im Kondensatabscheideraum (26) Barriereelemente (25) dergestalt angeordnet sind, dass das kondensierte Öl in Richtung des Gehäuseinnenraumes abfließen kann.

6. Ölabscheideranordnung nach einem der vorhergehenden Ansprüche, **dadurch gekennzeichnet, dass** zur Ausströmung des Gasstromes zur Außenseite hin an dem Außenmantel (14) wenigstens ein Luftauslass (32) vorhanden ist.

7. Ölabscheideranordnung nach einem der vorhergehenden Ansprüche, **dadurch gekennzeichnet, dass** der Prallabscheider (15) derartig labyrinthförmig gestaltet ist, dass der Gasstrom einen kaskadenförmigen Verlauf nimmt.

8. Verwendung einer Ölabscheideranordnung nach einem der vorhergehenden Ansprüche 1 bis 7 in einem thermodynamischen Retarder.

9. Thermodynamischer Retarder, aufweisend eine Ölabscheideranordnung gemäß einem der Ansprüche 1 bis 7.

## Claims

1. Oil separator arrangement with an oil separator (10) for separating oil from a gas flow, and with a housing (11) at which the oil separator is arranged and which separates an interior side (13) from an exterior side (12), the oil separator (10) featuring a support tube (21) disposed within an outer shell (14) and being able to be flowed through radially, the support tube (21) being closed at its upper end side (22) and communicating at its lower end side (16) with the interior side (13) of the housing (11) and carrying a filter element (19) at its circumferential side, **characterized in that** in the area of the lower end side (16) of the support tube (21) an impact separator (15) is disposed, the outer shell (14) being sealingly connected at its bottom side with the housing.

2. Oil separator arrangement according to claim 1, **characterized in that** intermediate spaces (31) exist between outer shell (14) and filter element (19), at least one of them being a condensate separator chamber (26).

3. Oil separator arrangement according to claim 2, **characterized in that** metallic condensation elements are disposed within the condensate separator chamber (26).

4. Oil separator arrangement according to the above claims 2 and 3, **characterized in that** the condensate separator chamber (26) features a defined opening (28) directed towards the flow side of the filter element (19) which delimits the gas flow.

5. Oil separator arrangement according to one of the above claims 2 to 4, **characterized in that** in the condensate separator chamber (26) barrier elements (25) are disposed in such a way that the condensed oil can flow off in the direction of the housing interior.

6. Oil separator arrangement according to one of the above claims, **characterized in that** at least one air outlet (32) is provided at the outer shell (14) to allow the outflow of the gas flow towards the exterior side .

7. Oil separator arrangement according to one of the above claims, **characterized in that** the impact separator (15) has the design of a labyrinth in such a way that the gas flow takes a cascade-like course.

8. Use of an oil separator arrangement according to one of the above claims 1 to 7 in a thermodynamic retarder.

9. Thermodynamic retarder, featuring an oil separator arrangement according to one of the claims 1 to 7.

## Revendications

1. Ensemble de séparateur d'huile, avec un séparateur d'huile (10) destiné à séparer l'huile d'un flux gazeux et avec un boîtier (11) sur lequel le séparateur d'huile est disposé et qui sépare une face intérieure (13) d'une face extérieure (12), le séparateur d'huile (10) présentant un tube de support (21) placé à l'intérieur d'une enveloppe extérieure (14) et pouvant être traversé par un flux en sens radial, le tube de support (21) étant fermé au niveau de sa face frontale supérieure (22) et communiquant au niveau de sa face frontale inférieure (16) avec la face intérieure (13) du boîtier (11) et portant sur sa face circonférentielle un élément filtrant (19), **caractérisé en ce qu'**un séparateur à impact (15) est disposé dans la zone de la face frontale inférieure (16) du tube de support (21), l'enveloppe extérieure (14) étant reliée de façon étanche, au niveau de sa face inférieure, avec le boîtier.

2. Ensemble de séparateur d'huile selon la revendication 1, **caractérisé en ce que** des interstices (31) sont ménagés entre l'enveloppe extérieure (14) et l'élément filtrant (19), dont lesquels au moins un est un compartiment de séparation de condensat (26).

3. Ensemble de séparateur d'huile selon la revendication 2, **caractérisé en ce que** des éléments de condensation métalliques sont disposés dans le compartiment de séparation de condensat (26).

4. Ensemble de séparateur d'huile selon les revendications 2 à 3 précédentes, **caractérisé en ce que** le compartiment de séparation de condensat (26) présente en direction du côté de flux de l'élément filtrant (19) une ouverture définie (28) qui limite le flux de gaz.

5. Ensemble de séparateur d'huile selon l'une des revendications 2 à 4 précédentes, **caractérisé en ce que** des éléments de barrière (25) sont disposés dans le compartiment de séparation de condensat (26) de sorte que l'huile condensée puisse s'écouler en direction de l'intérieur du boîtier.

6. Ensemble de séparateur d'huile selon l'une des revendications précédentes, **caractérisé en ce qu'**au moins une sortie d'air (32) est prévue sur l'enveloppe extérieure (14) en vue de l'écoulement du flux de gaz vers la face extérieure.

7. Ensemble de séparateur d'huile selon l'une des revendications précédentes, **caractérisé en ce que** le séparateur à impact (15) est réalisé en forme de labyrinthe de sorte que le flux de gaz s'opère en forme de cascade.

8. Utilisation d'un ensemble de séparateur d'huile selon l'une des revendications 1 à 7 précédentes dans un retardateur thermodynamique.

9. Retardateur thermodynamique présentant un ensemble de séparateur d'huile selon l'une des revendications 1 à 7.
